# EUROPEAN PATENT APPLICATION

(11) **EP 4 793 477 A1**
(43) Date of publication of application: **19.08.2026**
(21) Application number: 26151718.9
(22) Date of filing: 14.01.2026
(51) Int. Cl.: F02C 3/22, F02C 9/40, F02C 7/224

(54) **GAS TURBINE ENGINE FUEL AND HYDRAULIC SYSTEM**

(30) Priority: 14.02.2025 GB 202502226
(71) Applicant: Rolls-Royce plc, London N1 9FX (GB)
(72) Inventor: Chittim, Sophie, Derby, DE24 8BJ (GB); Newman, Adam, Derby, DE24 8BJ (GB); Scott, Richard A, Derby, DE24 8BJ (GB)
(74) Representative: Rolls-Royce plc

(57) **Abstract**

An aircraft gas turbine engine (103) comprises a fuel system comprising a first fuel line (108) configured to provide a first liquid hydrocarbon fuel to a combustor (203) of the gas turbine engine (103), and a second fuel line (109) configured to provide a second fuel, different to the first fuel, to the combustor (203) of the gas turbine engine (103). The gas turbine engine also comprises a hydraulic system configured to be driven by the first fuel during operation of the gas turbine combustor (203) when the gas turbine combustor utilises either or both of the first and second fuel.

## Description

### CROSS REFERENCE TO RELATED APPLICATIONS

This represents the first application directed towards the subject-matter.

### FIELD

This disclosure relates to a fuel and hydraulic system for a gas turbine engine. "Fueldraulic" systems are hydraulic systems that utilise fuel as the hydraulic fluid. Such systems are widely employed in aircraft for purposes including actuation, cooling and lubrication.

### BACKGROUND

Alternative aircraft fuels have been proposed for either or both of cost and environmental considerations. For example, cryogenic fuels including liquid methane, liquid ammonia and liquid hydrogen have been proposed for such aircraft. However, such fuels impose difficulties including providing sufficient range and requiring additional airport infrastructure for the provision of the fuel. Separately, such aircraft require provision of hydraulic, cooling and lubrication systems, which may be difficult to achieve utilising such alternative fuels.

### SUMMARY

In a first aspect there is provided an aircraft gas turbine engine comprising:
a fuel system comprising:
a first fuel line configured to provide a first liquid hydrocarbon fuel to a combustor of the gas turbine engine, and a second fuel line configured to provide a second fuel, different to the first fuel, to the combustor of the gas turbine engine; and
a hydraulic system configured to be driven by the first fuel during operation of the gas turbine combustor when the gas turbine combustor utilises either or both of the first and second fuel.

Accordingly, the system provides for the use of either a first or a second fuel during gas turbine engine operation, to thereby reduce the need for provision of the second fuel at all destinations, and to increase range. Meanwhile, the hydraulic system utilises the first liquid hydrocarbon fuel, irrespective of which fuel is used in the combustor, thereby precluding the requirement to adapt the hydraulic system to the use of either fuel, or the provision of two separate hydraulic systems.

The first liquid hydrocarbon fuel may comprise one or more of Jet A, Jet A-1, synthetic jet fuel, aviation biofuel, or a blend thereof, and the second fuel may comprise a cryogenically stored fuel such as one or more of hydrogen, ammonia, and methane or a blend thereof.

The hydraulic system may comprise one or more heat exchangers and / or actuators configured to be driven by the first fuel.

The one or more heat exchangers may comprise an oil to first fuel heat exchanger. Advantageously, a single oil to fuel heat exchanger can be employed in an aircraft utilising first and second fuel types. Accordingly, contamination of fuel types and / or duplication of heat exchangers us avoided.

The one or more heat exchangers may comprise a preheater comprising a first fuel to second fuel heat exchanger. Accordingly, the first fuel can be employed for preheating the second fuel to a higher temperature prior to combustion.

The oil to first fuel heat exchanger may be provided upstream in first fuel flow of the preheater. Accordingly, heat from the oil can be transferred to the first fuel via the second fuel during operation. This reduces the risk of oil coming into contact with the first fuel in the event of a heat exchanger failure. It also prevents overheating of the first fuel during operation where the second fuel is utilised in the combustor.

The fuel system may comprise a first fuel recirculation line configured to return at least a portion of first fuel to the first fuel line. The first fuel return line may comprise a fuel return point configured to return first fuel to the first fuel line upstream in first fuel line flow of the preheater.

The fuel system may comprise a first fuel pump configured to pump the first fuel through the first fuel line. The first fuel pump may be provided downstream of the fuel return point and upstream of the preheater.

The one or more actuators may comprise one or more of a first fuel metering unit, a second fuel metering unit, a variable stator valve actuator and a turbine case cooling valve actuator.

The fuel system may comprise a second fuel metering unit bypass valve configured to bypass first fuel flow around the second fuel metering valve.

The fuel system may comprise a second fuel pump configured to pump the second fuel through the second fuel line.

The second fuel pump may be provided upstream in second fuel flow of the preheater.

The one or more heat exchangers may comprise an engine exhaust heat to first fuel recuperator. Accordingly, engine exhaust heat can be recovered for fuel heating purposes.

The recuperator may be provided downstream in first fuel flow of the oil to first fuel heat exchanger. Accordingly, first fuel heat capacity is sufficiently low to permit oil cooling, while still being able to provide engine waste heat recovery.

According to a second aspect there is provided an aircraft comprising a gas turbine engine in accordance with the first aspect.

According to a third aspect there is provided a method of operating an aircraft gas turbine engine hydraulic system comprising:
providing a fuel system comprising:
a first fuel line configured to provide a first liquid hydrocarbon fuel to a combustor of the gas turbine engine, and a second fuel line configured to provide a second fuel, different to the first fuel, to the combustor of the gas turbine engine; and
providing a hydraulic system configured to be driven by the first fuel; wherein the method comprises:
   in a first operating mode, providing the first fuel to the gas turbine combustor and driving the hydraulic system using the first fuel; and
   in a second operating mode, providing the second fuel to the gas turbine combustor and driving the hydraulic system using the first fuel.

### BRIEF DESCRIPTION OF THE DRAWINGS

Embodiments will now be described by way of example only with reference to the accompanying drawings, in which:
FIG. 1 shows a schematic plan view of an aircraft comprising a pair of gas turbine engines and corresponding fuel systems;
FIG. 2 shows a schematic view of one of the gas turbine engines and a first fuel suitable for the gas turbine engine of FIG 1; and
FIG. 3 shows a schematic view of an alternative fuel system for the gas turbine engine of FIG. 1.

### DETAILED DESCRIPTION

### FIG. 1

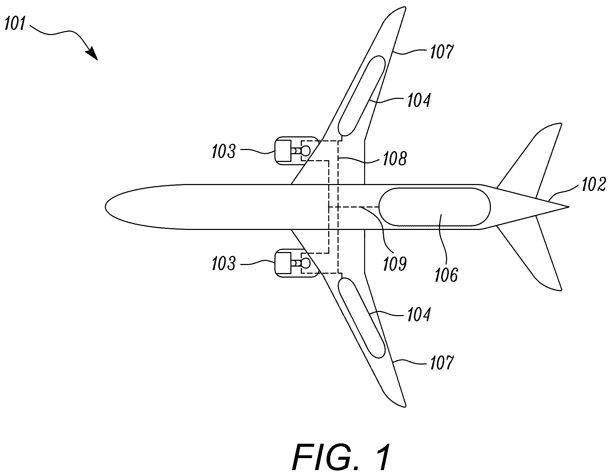

A hydrogen-fuelled airliner is illustrated in Figure 1. In this example, the airliner 101 is of substantially conventional tube-and-wing twinjet configuration with a central fuselage 102 and substantially identical turbofan engines 103 mounted under each wing 107. The turbofan engines 103 may, for example, be geared turbofan engines.

A first fuel tank 104 is located in each wing and is configured to store a first liquid hydrocarbon fuel. Suitable liquid hydrocarbon fuels include Jet A, synthetic jet fuel, aviation biofuel, or a blend thereof. Typically, the fuels are stored at ambient temperature and pressure, or at a slightly above ambient pressure.

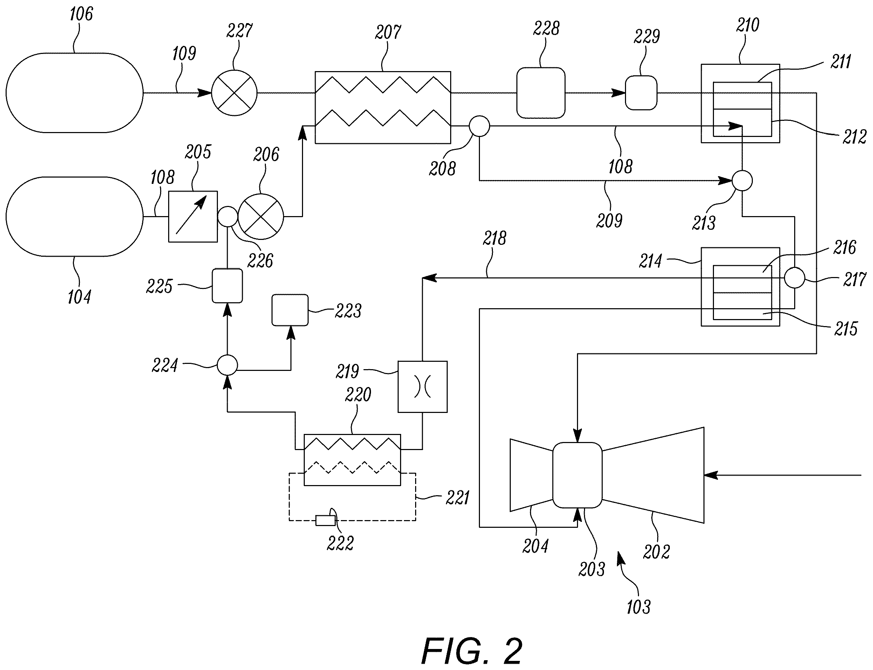

A separate second tank 106 is provided within the fuselage 102 for storing hydrogen fuel. A fuel system connects the tanks 104 and 106 with core gas turbines 105 in the turbofan engines 103 via respective first and second fuel lines 108, 109. The fuel delivery system will be described further with reference to Figure 2. In the present embodiment, the second fuel tank 106 is a cryogenic fuel tank that stores the hydrogen fuel in a liquid state. In a specific example, the hydrogen fuel is stored at 20 kelvin. The hydrogen fuel may be pressurised to a pressure of from around 1 bar to around 3 bar, for example around 2 bar.

### Fig. 2

A schematic block diagram illustrating the flow of hydrogen fuel to one of the engines 103 is shown in Figure 2.

Each engine 103, in axial flow series, a compressor 202, a combustor 203 and a turbine 204. The compressor 202 is driven by the turbine 204 via a shaft (not shown). A fan (not shown) is typically provided, and is driven by a further turbine (not shown).

It will be appreciated that the principles disclosed herein may be applied to a direct-drive type turbofan engine or a geared engine, and/or to engines with different numbers of spools, for example two or three spools.

Referring first to the first liquid hydrocarbon fuel system, the first fuel line 108 is configured to transfer fuel from the first fuel tank 104. A fuel shutoff valve 205 is provided immediately downstream of the first fuel tank 104, and is configured to control flow from the tank 104. Typically, the fuel shutoff valve has only open and closed positions, but may be configured to control flow rate between fully open and fully closed positions.

A first fuel pump 206 is provided downstream in first fuel flow of the shutoff valve 205 in the first fuel line 109. The first fuel pump is configured to pump liquid hydrocarbon fuel along the first fuel line 108, and not typically configured to pump other fuel types. Accordingly, the fuel pump is of a type suitable for such fuels, such as a constant displacement pump. Such pumps include piston pumps and gear pumps, and are configured to provide high pressure in few stages.

A pre-heater 207 is provided downstream in first fuel flow of the first fuel pump 206. The pre-heater comprises a heat exchanger configured to transfer heat from the first fuel in the first fuel line 108 to the second fuel in the second fuel line 109. A pre-heater is required for the second fuel, in view of the low storage temperature of the second fuel (as low as 25 Kelvin in the case of liquid hydrogen). Advantageously, by using the first fuel to provide heat to the second fuel, waste heat from the second fuel is used to provide the necessary heat, thereby increasing engine efficiency. Furthermore, since both heat exchange fluids are fuels, substantially no oxygen is present in ether heat exchange fluid. Accordingly, fire risk is reduced. As such, safety is improved compared to a system in which waste heat from engine is exhaust (i.e. a recuperator) is used to heat the second fuel.

A bypass valve 208 is provided downstream in first fuel flow of the preheater 207. The bypass valve 208 is configured to direct fuel either downstream in the first fuel line 108, or to a first fuel bypass line 209. The purpose and operation of the bypass valve 208 is described later. It will be appreciated that this bypass valve 208 and bypass line 209 could be omitted in some embodiments.

Returning now to first fuel line 108 flow, a second fuel metering unit 210 is provided downstream of the bypass valve 208. The second fuel metering unit 210 is configured to control the flow rate of second fuel delivered to the gas turbine engine combustor 203. The second fuel metering unit 210 is typically configured to control a flow rate of fuel in a gaseous or supercritical state, and as such may comprise one or more adjustable throttle orifices 211. The second fuel metering unit 210 comprises a fluidically driven valve actuator 212, which is driven by first fuel provided from the first fuel line 108. Accordingly, first fuel in the first fuel line 108 is utilised as a hydraulic fluid (sometimes referred to as "fueldraulic"). The use of first fuel for the actuation of the second fuel metering valve 212 enables efficient and accurate control over second fuel flow. In contrast, the second fuel is typically either in a cryogenic liquid state, or a gaseous state. As will be understood, the term "cryogenic" refers to substances that are gaseous at room temperature, and are maintained in a liquid state at reduced temperature. The use of cryogenic fluids for valve actuation may result in unreliability, in view of the risk of icing, and the difficulty in lubricating such devices at low temperatures. On the other hand, the user of a supercritical or gaseous fuel to drive the actuators would involve the use of a compressible fluid. Compressible fluids are less suitable for the accurate control of valves, in view of their compressibility leading to reduced repeatability and precision in use. Accordingly, the present disclosure provides an accurate and efficient means of controlling the second fuel metering device that does not present the above problems.

A fuel junction 213 is provided downstream in first fuel flow of the valve actuator 212 in the first fuel line 108. At the fuel junction 213, first fuel line 108 and bypass fuel line 209 flows are recombined.

A first fuel metering unit 214 is then provided downstream of the fuel junction 213. The first fuel metering unit 214 is configured to control the flow rate of first fuel delivered to the gas turbine engine combustor 203. The first fuel metering unit 214 is typically configured to control a flow rate of fuel in a liquid state, and as such may comprise one or more adjustable throttle orifices 215 or a spill valve, which redirects fuel to a spill return line. The first fuel metering unit 214 comprises a fluidically driven valve actuator 216, which is driven by first fuel provided from the first fuel line 108. Accordingly, first fuel in the first fuel line 108 is utilised as a hydraulic fluid to actuate both the first and second fuel metering units 210, 214. In view of this, motive force for first and second fuel metering, and for first fuel pumping, is provided by a single pump 206. Accordingly, the fuel system is considerably simplified.

Prior to entering the orifice 215, the fuel is split into two paths at a junction 217 which is provided upstream in first fuel flow of the orifice 215 and actuator 216. Accordingly, a first portion of the first fuel passes through the orifice 215 and is directed toward the combustor 203, while a second portion bypasses the combustor and is utilised to drive the actuator 216.

This second actuation flow continues further downstream in a first fuel recirculation line 218. A further restrictor 219 is provided downstream in first fuel flow of the first fuel metering unit 214, and serves to control flow rate through the recirculation line 218.

An oil to first fuel heat exchanger 220 is provided downstream of the restrictor 219. The oil to first fuel heat exchanger comprises an oil cooler, having an oil line 221 in thermal communication with first fuel in the fuel recirculation line 218. Accordingly, oil in the oil line (and consequently oil cooled components generally indicated at 222) are cooled by the first fuel. Cooling of the oil using fuel is more efficient than using air for example, in view of the superior heat exchange properties of fuel, which results in a smaller heat exchanger. On the other hand, cooling the oil utilising the first hydrocarbon fuel rather than the second fuel also present advantages. The storage temperature of the second fuel may be tool low, which risks over-cooling the oil, which may result in oil viscosity increasing to the point where it no longer flows efficiently. Additionally, if the oil were to be cooled by the second fuel directly, this presents a potential leakage path of the second fuel into the oil. This is particularly problematic where the second fuel comprises hydrogen, which is difficult to seal. The presence of hydrogen in the oil system may present a fire risk, as air may also be present in the oil system.

Further optional components may be provided downstream of the oil cooler 220 in the first fuel recirculation flow line 218.

A pressure relief valve 223 may be provided, which may be configured to release pressure. The pressure relief valve 223 is connected to the recirculation line via a junction 226.

A filter 225 is also provided to prevent any contaminants re-entering the main first fuel line 108.

Finally, the recirculation line 218 rejoins the first fuel line 108 at a junction provided downstream in first fuel line 108 flow of the shutoff valve 205, and upstream of the pump 206. Accordingly, fuel is force through both the first fuel line 108 and the recirculation line 218 by the pump 206.

Referring now to the second fuel line 109, a second fuel pump 227 is provided downstream of the second fuel tank 106. The second fuel pump 227 may be of a different type than the first fuel pump. Typically, cryogenic fuels such as liquid methane, ammonia and hydrogen are more difficult to pump without experiencing issues such as cavitation. It is also desirable to separate the fuel pumps 206, 227 to avoid fuel contamination, as conventional hydrocarbon fuel may freeze at the temperatures at which the second fuel is stored. Accordingly, suitable pumps include centrifugal flow pumps, although other types may be utilised.

The pre-heater 207 is provided downstream in second fuel flow of the second fuel pump 227. The second fuel is heated by the first fuel by mutual thermal exchange. Accordingly, the second fuel is heated after being pumped by heat exchange with the first fuel. As will be appreciated further heaters may be provided, such as one or more electrical heaters (not shown).

As this point in the fuel system, the second fuel may be gaseous, and as such a gaseous accumulator 228 is provided downstream of the pre-heater 207. Accordingly, pressure and massflow fluctuations in the second fuel system can be absorbed.

The second fuel metering unit 210 is provided downstream in second fuel flow of the accumulator 229. As mentioned above, the second fuel metering unit is driven by the first fuel by the actuator 212. The metered fuel is then passed to the combustor 203.

The gas turbine engine 103 and associated fuel system are operable in one of two modes.

In a first mode, the gas turbine engine is fuelled exclusively by the first, liquid hydrocarbon fuel. In this mode, the second fuel pump 227 is inoperative, as is the second fuel metering unit 210.

In the first mode, first fuel is introduced from the first fuel tank 104 to the first fuel line 108. The shutoff valve 205 is opened, to allow fuel to flow to an input of the first fuel pump 206. Fuel is pumped by the pump through the first fuel line 108 to the pre-heater. However, since no second fuel is flowing through the second fuel line 109, relatively little heat exchange occurs.

Where present, first fuel is directed through the bypass valve 208 and through the first fuel bypass line 209, to thereby bypass the second fuel metering unit 210. Fuel is then directed to the first fuel metering unit 214, where it is both metered to the combustor 203, and directed through the actuator 216 to drive the first fuel metering unit 214.

Fuel directed through the actuator 216 is directed through the first fuel recirculation line 218, where it flows first through the restrictor 219, oil cooler 220 and filter 225. Accordingly, first fuel is used to both power the fuel metering unit 214 and cool the oil in the oil line 221.

The warmed fuel is then transferred back to the first fuel line 108 via the junction 226, where it mixes with the cool fuel in the first fuel line 108. Accordingly, oil heat is ultimately rejected to the engine via the first fuel line 108.

In the second mode, second fuel is introduced from the second fuel tank 106 to the second fuel line 109, where it flows to an input of the second fuel pump 227. Fuel is pumped by the pump 227 through the second fuel line 109 to the pre-heater. In this case, heat is transferred from the first fuel in the first fuel line 108 to the second fuel in the second fuel line 109, as will be explained in further detail below.

The second fuel then flows through the accumulator 228 and filter 229, before being passed to the second fuel metering unit 210. Second fuel is metered through the second fuel metering unit, which is driven by first fuel flow. This second fuel is then delivered to the combustor 203.

Simultaneously, first fuel flow continues to flow through the first fuel line 108 during operation in the second mode, even though the first fuel is not delivered to the combustor 203.

The shutdown valve 205 is closed, such that only fuel within the fuel line 108 is used during this operating mode. However, the pump 206 is operated, in a similar manner to the first mode. First fuel flows through the pre-heater 207, where is heats the second fuel therein.

Where present, first fuel is directed through the bypass valve 208 and through the first fuel line 208, to thereby flow through the second fuel metering unit 210 rather than the fuel bypass line 209. Accordingly, the second fuel metering unit 210 is actuated by first fuel, with motive power being provided by the first fuel pump 206.

Fuel is then directed to the first fuel metering unit 214. However, the first fuel metering unit 214 is configured to deliver no first fuel flow to the combustor 203 in this operating mode. Accordingly, all first fuel flow is directed through the actuator 216 to drive the first fuel metering unit 214, and to components in the first fuel recirculation line 218 downstream.

Fuel directed through the actuator 216 is directed through the first fuel recirculation line 218, where it flows first through the restrictor 219, oil cooler 220 and filter 225 as in the first operating mode. Accordingly, first fuel is used to both power the fuel metering unit 214 and cool the oil in the oil line 221.

The warmed fuel is then transferred back to the first fuel line 108 via the junction 226, where it re-circulates through the pre-heater 207, to thereby warm the second fuel in the second fuel line 109. Accordingly, oil heat is ultimately rejected to the engine via the second fuel in the second fuel 109. Accordingly, two functions are simultaneously provided - oil cooling and second fuel heating, without a requirement for direct thermal contact between second fuel and oil, and without a requirement for a separate system. Accordingly, the additional weight of the second fuel system is minimised.

A third operating mode may also be provided, in which both first and second fuel flows are provided to the combustor 203. In this mode, the fuel system is operated in a similar manner to the second mode, except that the fuel shutoff valve 205 is opened, and the first fuel metering unit 214 is operated to provide a required massflow rate and first fuel flow pressure. In such a system, separate injectors may be provided for the first and second fuels.

### Fig. 3

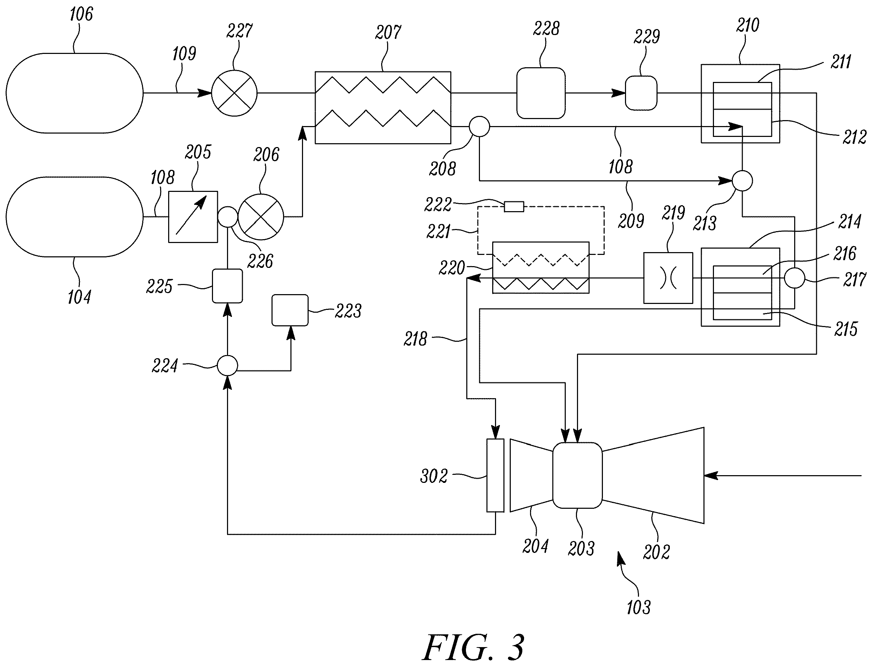

Figure 3 shows an alternative fuel system, which incorporates an additional means for providing heat to the second fuel.

The system is similar to that of figure 2, and so only differences between the two systems will be described in detail.

The fuel system includes a recuperator heat exchanger 302. The recuperator heat exchanger 302 is configured to exchange heat between gas turbine engine exhaust gases downstream of the turbine 204, and first fuel in the fuel recirculation line 218.

Typically, the recuperator heat exchanger 302 is provided downstream of the oil cooler 220 in first fuel flow, such that relatively cool fuel is provided to cool the oil, and a large heat capacity is available to transfer engine exhaust heat to the first fuel. The filter 225 is provided downstream of the recuperator 302, as in the embodiment shown in figure 2. The restrictor 219 is provided upstream of the oil cooler 220, in order to ensure the pressure within the fuel lines is low, such that oil leaks into the fuel rather than fuel into the oil in the event of an oil cooler leak. Heated fuel is again returned to the first fuel line 108 after heating by the recuperator 302.

Accordingly, additional heat can be transferred to the second fuel via the heat exchanger 207, using engine heat transferred to the first fuel from the recuperator 302. Accordingly, engine exhaust heat is used efficiently, without requiring a direct air to second fuel heat exchanger. In view of the difficulty in sealing cryogenic fuels, and their high flammability, such a heat exchanger would be challenging to make safe. Accordingly, the safety of the system is improved compared to system in which direct heat exchange is provided between gas turbine engine exhaust and cryogenic fuel.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

Modifications to the disclosed arrangement can be provided while remaining within the scope of the claims. For example, additional heaters could be provided, such as one or more combustor pre-heaters or electrical heaters for heating the cryogenic fuel. Such pre-heaters may heat the fuel via a second-fuel to pre-heater heat exchanger. Additional or alternative engine or aircraft hydraulic systems could be driven by the first fuel.

## Claims

1. An aircraft gas turbine engine (103) comprising:
a fuel system comprising:
a first fuel line (108) configured to provide a first liquid hydrocarbon fuel to a combustor (203) of the gas turbine engine (103), and a second fuel line (109) configured to provide a second fuel, different to the first fuel, to the combustor (203) of the gas turbine engine (103); and
a hydraulic system configured to be driven by the first fuel during operation of the gas turbine combustor (203) when the gas turbine combustor utilises either or both of the first and second fuel.

2. An aircraft gas turbine engine according to claim 1, wherein first liquid hydrocarbon fuel comprises one or more of Jet A, Jet A-1, synthetic jet fuel, aviation biofuel, or a blend thereof and the second fuel comprises a cryogenically stored fuel such as one or more of hydrogen, ammonia, and methane or a blend thereof.

3. An aircraft gas turbine engine according to claim 1 or claim 2, wherein the hydraulic system comprises one or more heat exchangers (207, 220, 302) and / or actuators (212, 216) configured to be driven by the first fuel.

4. An aircraft gas turbine engine according to claim 3, wherein the one or more heat exchangers comprises an oil to first fuel heat exchanger (220).

5. An aircraft gas turbine engine according to claim 3 or claim 4, wherein the one or more heat exchangers comprise a preheater (207) comprising a first fuel to second fuel heat exchanger.

6. An aircraft gas turbine engine according to claim 4 and claim 5, wherein the oil to first fuel heat exchanger (220) is provided upstream in first fuel flow of the preheater (207).

7. An aircraft gas turbine engine according to any of the preceding claims, wherein the fuel system comprises a first fuel recirculation line (218) configured to return at least a portion of first fuel to the first fuel line (108).

8. An aircraft gas turbine engine according to claim 7 when dependent on claim 5 or claim 6, wherein the first fuel recirculation line (218) comprise a fuel return point (226) configured to return first fuel to the first fuel line (108) upstream in first fuel line flow of the preheater (207).

9. An aircraft gas turbine engine according to any of the preceding claims, wherein the fuel system comprises a first fuel pump (206) configured to pump the first fuel through the first fuel line (108).

10. An aircraft gas turbine engine according to claim 8 and claim 9 when dependent on claim 5 or any claim dependent thereon, wherein the first fuel pump (206) is provided downstream of the fuel return point (226) and upstream of the preheater (207).

11. An aircraft gas turbine engine according to claim 3 or any claim dependent thereon, wherein the one or more actuators comprise one or more of a first fuel metering unit (214), a second fuel metering unit (210), a variable stator valve actuator and a turbine case cooling valve actuator, and wherein the fuel system may comprise a second fuel metering unit bypass valve (208) configured to bypass first fuel flow around the second fuel metering valve (210).

12. An aircraft gas turbine engine according to any of the preceding claims, wherein the fuel system comprise a second fuel pump (227) configured to pump the second fuel through the second fuel line (209).

13. An aircraft gas turbine engine according to claim 12 when dependent on claim 5 or any claim dependent thereon, wherein the second fuel pump (227) is provided upstream in second fuel flow of the preheater (207).

14. An aircraft gas turbine engine according to claim 3 or any claim dependent thereon wherein the one or more heat exchangers comprises an engine exhaust heat to first fuel recuperator (302).

15. An aircraft gas turbine engine according to claim 14 and claim 4 or any claim dependent thereon, wherein the recuperator (302) is provided downstream in first fuel flow of the oil to first fuel heat exchanger (220).

16. An aircraft comprising the gas turbine engine of any of the preceding claims.

17. A method of operating an aircraft gas turbine engine hydraulic system comprising:
providing a fuel system comprising:
a first fuel line (108) configured to provide a first liquid hydrocarbon fuel to a combustor (203) of the gas turbine engine (103), and a second fuel line (109) configured to provide a second fuel, different to the first fuel, to the combustor (203) of the gas turbine engine (103); and
providing a hydraulic system configured to be driven by the first fuel; wherein the method comprises:
in a first operating mode, providing the first fuel to the gas turbine combustor (203) and driving the hydraulic system using the first fuel; and
in a second operating mode, providing the second fuel to the gas turbine combustor (203) and driving the hydraulic system using the first fuel.
